# EUROPÄISCHE PATENTSCHRIFT

(11) **EP 0 834 387 B1**
(45) Veröffentlichungstag und Bekanntmachung des Hinweises auf die Patenterteilung: **02.07.2003**
(21) Anmeldenummer: 97115250.9
(22) Anmeldetag: 03.09.1997
(51) Int. Cl.: B29C 47/28, B29C 47/24, B29C 47/04

(54) **Verfahren zur Herstellung von flächigen Teilen, insbesondere Kunststoff-Folien, mittels Extrusion**
Method of producing flat articles, especially plastic films, by extrusion, extruded flat articles, and apparatuses for extruding
Procédé pour la fabrication d'objets plats, en particulier de films plastiques, par extrusion

(30) Priorität: 03.09.1996 DE 19635697
(43) Veröffentlichungstag der Anmeldung: 08.04.1998
(73) Patentinhaber: Büscherhoff, Bernd, 49439 Steinfeld (DE)
(72) Erfinder: Büscherhoff, Bernd, 49439 Steinfeld (DE)
(74) Vertreter: Eisenführ, Speiser & Partner

(56) Entgegenhaltungen:
- EP-A- 0 662 385
- DE-A- 3 934 670
- GB-A- 1 271 759
- US-A- 3 759 647
- US-A- 4 521 368
- US-A- 4 526 952

## Beschreibung

Die Erfindung betrifft ein Verfahren zur Herstellung von flächigen, insbesondere folienartigen, Teilen aus mindestens zwei unterschiedlichen Materialien, insbesondere Kunststoffen, mittels Extrusion, indem die Materialien in geschmolzenem Zustand im wesentlichen in Richtung der Quererstreckung eines zu extrudierenden Teiles sowie quer zur Ausstoßrichtung nebeneinanderliegend aus der Extrusionsvorrichtung gleichzeitig ausgestoßen werden. Die Erfindung betrifft ferner ein durch Extrusion hergestelltes flächiges, insbesondere folienartiges, Teil aus mindestens zwei unterschiedlichen Materialien, insbesondere Kunststoffen, die in einer ersten Lage des flächigen Teils nebeneinander liegende. Abschnitte bilden. Schließlich betrifft die Erfindung noch eine Vorrichtung zur Herstellung von aus mindestens zwei unterschiedlichen Materialien, insbesondere Kunststoffen, bestehenden flächigen, insbesondere folienartigen, Teilen, mittels Extrusion, mit mehreren Materialaustrittsöffnungen zur Abgabe der unterschiedlichen Materialien in geschmolzenem Zustand, wobei jeweils ein bestimmtes Material aus einer bestimmten Materialaustrittsöffnung abgegeben wird.

Bei einem bekannten Verfahren der zuvor genannten Art werden die unterschiedlichen Materialien so ausgestoßen, daß sie zu einem schichtartigen Aufbau des zu extrudierenden flächigen Teiles verwendet werden; ein solches Verfahren wird auch Mehrschicht-Extrusuion genannt. Die hierzu eingesetzte bekannte Vorrichtung der zuvor genannten Art weist entsprechend der Anzahl der verwendeten unterschiedlichen Materialien mehrere Extrusionsdüsenelemente auf, die benachbart zueinander derart angeordnet sind, daß sich der schichtartige Aufbau aus den unterschiedlichen Materialien zur Bildung des flächigen Teiles während der Extrusion ergibt. Das Verfahren und die Vorrichtung der zuvor genannten Art werden insbesondere zur Extrusion von Kunststoff-Folien verwendet, indem beim Folienblasen über mehrere Extruder ein heißer Schmelzstrom aus den unterschiedlichen Materialien erzeugt wird, der über eine Ringdüse ausgeblasen und nach dem Abkühlen schlauchförmig aufgerollt wird, wobei die so extrudierte schlauchförmige Folie aus einem schichtartigen Aufbau der verwendeten Materialien besteht.

In der DE 39 34 670 A1 sind eine Folienbahn aus Kunststoff und ein Extrusionswerkzeug zur Wiederherstellung offenbart, wobei die Folienbahn aus nebeneinander liegenden Längsstreifen hergestellt wird. Der bei der Extrusion entstehende Folienschlauch wird nach Aufweitung durch Blasluft flachgelegt und entlang der so entstehenden Faltkanten in zwei ebene Folienbahnen geschnitten, die dann separat aufgewickelt werden.

Aufgabe der Erfindung ist es, auf einfache und kostengünstige Weise ein flächiges, insbesondere folienartiges, Teil mit einer Gitter- oder Netzstruktur herzustellen bzw. zur Verfügung zu stellen.

Diese Aufgabe wird gelöst durch ein Verfahren zur Herstellung von flächigen, insbesondere folienartigen, Teilen aus mindestens zwei unterschiedlichen Materialien, insbesondere Kunststoffen, mittels Extrusion, indem die Materialien in geschmolzenem Zustand im wesentlichen in Richtung der Quererstreckung eines zu extrudierenden Teiles sowie quer zur Ausstoßrichtung nebeneinanderliegend aus der Extrusionsvorrichtung gleichzeitig ausgestoßen werden, mit den Schritten, die Materialien in geschmolzenem Zustand derart aus der Extrusionsvorrichtung auszustoßen, dass eine erste Lage entsteht und dabei die unterschiedlichen Materialien nebeneinanderliegende Abschnitte der ersten Lage bilden, und die Materialien in geschmolzenem Zustand zusätzlich aus der Extrusionsvorrichtung so auszustoßen, dass neben der ersten Lage gleichzeitig mindestens eine separate zweite Lage entsteht, bei der die unterschiedlichen Materialien ebenfalls nebeneinanderliegende Abschnitte bilden, die jedoch winklig zu den Abschnitten der ersten Lage verlaufen, und die Lagen anschließend flächig miteinander zu verbinden.

Dementsprechend wird mit Hilfe der Erfindung ein durch Extrusion hergestelltes flächiges, insbesondere folienartiges, Teil aus mindestens zwei unterschiedlichen Materialien, insbesondere Kunststoffen, zur Verfügung gestellt, welche in einer ersten Lage des flächigen Teils nebeneinander liegende Abschnitte bilden, wobei mindestens eine mit der ersten Lage flächig verbundene zweite Lage vorhanden ist, die ebenfalls aus mindestens zwei unterschiedlichen Materialien besteht, die in der zweiten Lage ebenfalls nebeneinander liegende Abschnitte bilden, wobei die nebeneinander liegenden Abschnitte der ersten Lage in einem Winkel zu denen der zweiten Lage verlaufen.

Ferner wird die Aufgabe noch gelöst durch eine Vorrichtung zur Herstellung von aus mindestens zwei unterschiedlichen Materialien, insbesondere Kunststoffen, bestehenden flächigen, insbesondere folienartigen, Teilen, mittels Extrusion, insbesondere zur Durchführung des zuvor erwähnten Verfahrens, wobei mehrere Materialaustrittsöffnungen zur Abgabe unterschiedlicher Materialien in geschmolzenem Zustand quer zur Ausstoßrichtung eines zu extrudierenden schlauchförmigen Teiles in einem Ringdüsenelement nebeneinander in Reihe angeordnet sind und jeweils ein bestimmtes Material aus einer bestimmten Materialaustrittsöffnung abgegeben wird; wobei das Ringdüsenelement im wesentlichen in Richtung der Anordnung der Materialsaustrittsöffnung sowie quer zur Ausstoßrichtung des zu extrudierenden schauchförmigen Teiles bewegbar ist, und wobei eine Dubliereinrichtung nachgeschaltet ist, in der das extrudierte schlauchförmige Teil derart flächig zusammengefaltet bzw. - gelegt wird, dass seine beiden Hälften aufeinander gelegt und verbunden werden.

Schließlich wird die Aufgabe noch gelöst durch eine Vorrichtung zur Herstellung von aus mindestens zwei unterschiedlichen Materialien, insbesondere Kunststoffen, bestehenden flächigen, insbesondere folienartigen, Teilen, mittels Extrusion, insbesondere zur Durchführung des zuvor erwähnten Verfahrens, mit mindestens einer ersten und einer zweiten Gruppe von Materialaustrittsöffnungen zur Abgabe unterschiedlicher Materialien in geschmolzenem Zustand, wobei jeweils ein bestimmtes Material aus einer bestimmten Materialaustrittsöffnung abgegeben wird, wobei die Materialaustrittsöffnung der ersten Gruppe quer zur Ausstoßrichtung eines zu extrudierenden Teils in einem ersten Düsenelement nebeneinander in Reihe angeordnet sind und die Materialaustrittsöffnungen der zweiten Gruppe quer zur Ausstoßrichtung des zu extrudierenden Teils in einem zweiten Düsenelement nebeneinander in Reihe angeordnet sind, wobei die Düsenelemente im wesentlichen in Richtung der Anordnung der Materialaustrittsöffnung sowie quer zur Ausstoßrichtung des zu extrudierenden Teiles relativ zueinander bewegbar sind, wobei die erste Gruppe von Materialaustrittsöffnungen für die Herstellung einer ersten Lage des flächigen Teils und die zweite Gruppe von Materialaustrittsöffnungen für die Herstellung einer zweiten Lage des flächigen Teils vorgesehen ist, und mit einer Einrichtung zum flächigen Verbinden der Lagen.

Mit Hilfe der Erfindung kann auf überraschend einfache und kostengünstige Weise ein flächiges, insbesondere folienartiges, Teil mit einer Gitter- oder Netzstruktur geschaffen werden, bei welcher die aus den unterschiedlichen Materialien bestehenden Abschnitte der ersten und zweiten Lage sich kreuzen und somit Schnittstellen bzw. Knoten bilden, wo sie sich in mechanischem Kontakt miteinander befinden. Mit einer solchen Anordnung kann beispielsweise die Stabilität einer Kunststoff-Folie deutlich erhöht werden, indem die aus einem ersten Material bestehenden Abschnitte eine höhere Festigkeit als die übrigen Abschnitte aufweisen und somit die auf die Folie wirkende Belastung aufnehmen. Femer lassen sich mit Hilfe der Erfindung insbesondere Folien herstellen, die zur Vermeidung von elektrischen Aufladungen verwendet werden, wenn belspielsweise die Folie zu Verpackungszwecken von elektrostatisch empfindlichen Gegenständen eingesetzt wird. Für eine solche Anwendung wird beispielsweise für die aus dem ersten Material gebildeten Abschnitte ein leitfähiges Material, vorzugsweise ein leitfähiger Kunststoff, verwendet, während die übrigen Abschnitte aus nicht leitendem Material bestehen.

Demnach können flächige Teile mit Hilfe der Erfindung hergestellt werden, wobei die Vorteile der verwendeten unterschiedlichen Materialien wie beispielsweise Leitfähigkeit, Elastizität und/oder Farbe kombiniert werden können.

Zwar wird nach der Lehre der DE 39 34 670 A1 ein Folienschlauch hergestellt, der nach seiner Aufweitung durch Blasluft flachgelegt wird; jedoch der flachgelegte Folienschlauch entlang den so entstehenden Faltkanten in zwei ebene Folienbahnen geschnitten, die separat aufgewickelt werden. Demnach wird bei diesem Stand der Technik das Flachlegen des ausgepressten Folienschlauches nicht dazu benutzt, eine einzige zweilage Folienbahn herzustellen, sondern zwei separate einlagige Folienbahnen, die dementsprechend auch separat aufgewickelt und voneinander getrennten Verwendungen zugeführt werden.

Aus der EP 0 662 385 A1 ist ein Extrusionsverfahren und eine Extrusionsvorrichtung zur Herstellung eines rohrförmigen Teiles bekannt. Ein Flachlegen des extrudierten Teiles zur Herstellung eines zweilagigen flächigen Teiles wird in dieser Druckschrift dagegen nicht gelehrt.

Bevorzugte Ausführungen des erfindungsgemäßen Verfahrens sind in den abhängigen Ansprüchen 2 bis 11 angegeben.

Die Lagen können miteinander verklebt oder verschweißt werden.

Die Lagen können innerhalb der Extrusionsvorrichtung vor Austritt aus dieser miteinander verbunden werden.

Insbesondere sollten die Materialien für die Bildung der ersten Lage aus einem ersten Extrusionsdüsenelement und die Materialien für die Bildung der zweiten Lage aus einem zweiten Extrusionsdüsenelement ausgestoßen werden und sollte eine Relativbewegung des einen Extrusionsdüsenelementes gegenüber dem anderen Extrusionsdüsenelement quer zur Extrusionsrichtung erzeugt werden.

Alternativ können die Materialien in geschmolzenem Zustand auch aus der Extrusionsvorrichtung derart ausgestoßen werden, daß zunächst ein schlauchförmiger Körper entsteht und dabei die unterschiedlichen Materialien im wesentlichen in dessen Umfangsrichtung nebeneinanderliegende und schräg zur Extruslonsrichtung verlaufende Abschnitte bilden und anschließend die die ersten und zweiten Lagen bildenden beiden Hälften des schlauchförmigen Körpers flächig miteinander verbunden werden. Bei einer Weiterbildung dieser Ausführung können die Materialien aus mindestens einem Ringdüsenelement ausgestoßen werden, das um eine im wesentlichen in Extrusionsrichtung verlaufende Achse rotiert, wodurch ein schlauchförmiger Körper mit einem diagonal verschobenen, schraubenförmigen Streifengebilde entsteht. Dabei kann je nach Bedarf die Rotationsgeschwindigkeit variiert werden.

Für den Fall der Extrusion in Schlauchform ist es ferner vorteilhaft, das schlauchförmige extrudierte Teil nach der Extrusion radial zu dehnen, was insbesondere mit Hilfe einer besonderen Blastechnik durchgeführt wird, bevor die Hälften des schlauchförmigen Körpers miteinander verbunden werden. Dieser Verfahrensschritt eignet sich insbesondere bei der Herstellung von Folien, deren Oberfläche auf diese Weise vergrößert und deren Dicke verringert wird, wodurch sich eine bessere Materialausnutzung ergibt.

Bei einer weiteren bevorzugten Ausführung wird mindestens ein erstes und ein zweites Material aus einem ersten Ringdüsenelement und mindestens ein drittes Material aus einem zweiten Ringdüsenetement ausgestoßen, welches im wesentlichen koaxial zum ersten Ringdüsenelement angeordnet ist und in entgegengesetzter Richtung zu diesem rotiert, wodurch mindestens ein dritter Abschnitt erzeugt wird, der winklig zu den nebeneinanderliegenden ersten und zweiten Abschnitten aufgebracht wird und somit ein flächiges Teil mit Gitternetz-Konflguration entsteht.

Bevorzugte Ausführungen des erfindungsgemäßen Teils sind in den abhängigen Ansprüchen 13 bis 17 angegeben.

Schließlich sind vorteilhafte Ausführungen der erfindungsgemäßen Vorrichtung in den abhängigen Ansprüchen 19, 20 und 22 bis 30 angegeben.

So ist bzw. sind bei einer besonders bevorzugten Ausführung das Düsenelement bzw. Düsenelemente als Ringdüsenelement bzw. Ringdüsenelemente mit einem im Querschnitt im wesentlichen kreisförmigen Abgabeschlitz ausgebildet. Vorzugsweise ist das Ringdüsenelement bzw. sind Ringdüsenelemente um die Mittelpunktsachse des im wesentlichen ringförmigen Abgabeschlitzes rotierbar.

Sofern zwei Ringdüsenelemente vorgesehen sind, sollten zweckmäßigerweise die im wesentlichen ringförmigen Abgabeschlitze der beiden Ringdüsenelemente im wesentlichen konzentrisch und koaxial zueinander angeordnet sein. Die beiden Ringdüsenelemente können mit unterschiedlicher Geschwindigkeit und/oder in entgegengesetzter Richtung zueinander rotieren, wodurch sich beliebige Streifenkonfigurationen sowie insbesondere eine Gitternetz-Konfiguration im extrudierten flächigen Teil ergeben.

Insbesondere besteht jede Gruppe aus einer bestimmten Anzahl von Materialaustrittsöffnungen für jedes der abzugebenden unterschiedlichen Materialien.

Bei einer weiteren bevorzugten Ausführung mit mindestens einem Abgabekanal, der durch erste und zweite voneinander beabstandete Wände gebildet ist, sind die Materialaustrittsöffnungen zweckmäßigerweise in mindestens einer der Wände ausgebildet. Zur besseren Flächenausnutzung können die Materialaustrittsöffnungen in beiden Wänden des Abgabeschlitzes ausgebildet sein. Zweckmäßigerweise können für eine besonders effektive Extrusion die ersten Materialaustrittsöffnungen in der ersten Wand des Abgabekanals und die zweiten Materiaiaustrittsöffnungen in der zweiten Wand des Abgabekanals ausgebildet sein, wobei insbesondere die auf diese Weise gegenüberliegenden ersten und zweiten Materialaustrittsöffnungen im alternierenden Wechsel zueinander angeordnet sind.

Die Vorrichtung kann mit einem auswechselbaren Verteilerstück versehen sein, in welchem die Materialaustrittsöffnungen in den Abgabeschlitz münden. Durch den Austausch des Verteilerstückes ist es möglich, Breite und Anzahl der aus den unterschiedlichen Materialien gebildeten, insbesondere streifenförmigen Abschnitte zu verändern. Ebenfalls können die Materialaustrittsöffnungen so ausgebildet sein, dass sich entweder eine scharfe. Trennung oder eine partielle Überlappung zwischen benachbarten Abschnitten unterschiedlichen Materials ergibt.

Nachfolgend werden bevorzugte Ausführungsbeispiele der Erfindung anhand der beiliegenden Zeichnungen näher erläutert. Es zeigen:
- Figur 1: einen Längsschnitt durch einen Folienblaskopf in einer ersten Ausführung;
- Figur 2: einen Querschnitt durch einen Abschnitt eines im Folienblaskopf gemäß Figur 1 enthaltenen Verteilerstückes;
- Figur 3: eine ausschnittsweise Darstellung einer mit dem Folienblaskopf gemäß Figur 1 hergestellten Folie in einer ersten Ausführung in Draufsicht (Figur 3a) sowie im Querschnitt (Figur 3b) entlang der Linie III-III von Figur 3a;
- Figur 4: einen Längsschnitt durch einen Folienblaskopf in einer zweiten Ausführung;
- Figur 5: eine ausschnittsweise Querschnittsdarstellung der Anordnung von zwei im Folienblaskopf gemäß Figur 4 enthaltenen Verteilerstücken; und
- Figur 6: eine ausschnittsweise Darstellung einer wahlweise mit den Folienblasköpfen gemäß Figur 1 oder 4 hergestellten Folie in einer zweiten Ausführung in Draufsicht (Figur 6a) sowie im Querschnitt (Figur 6b) entlang der Linie VI-VI gemäß Figur 6a.

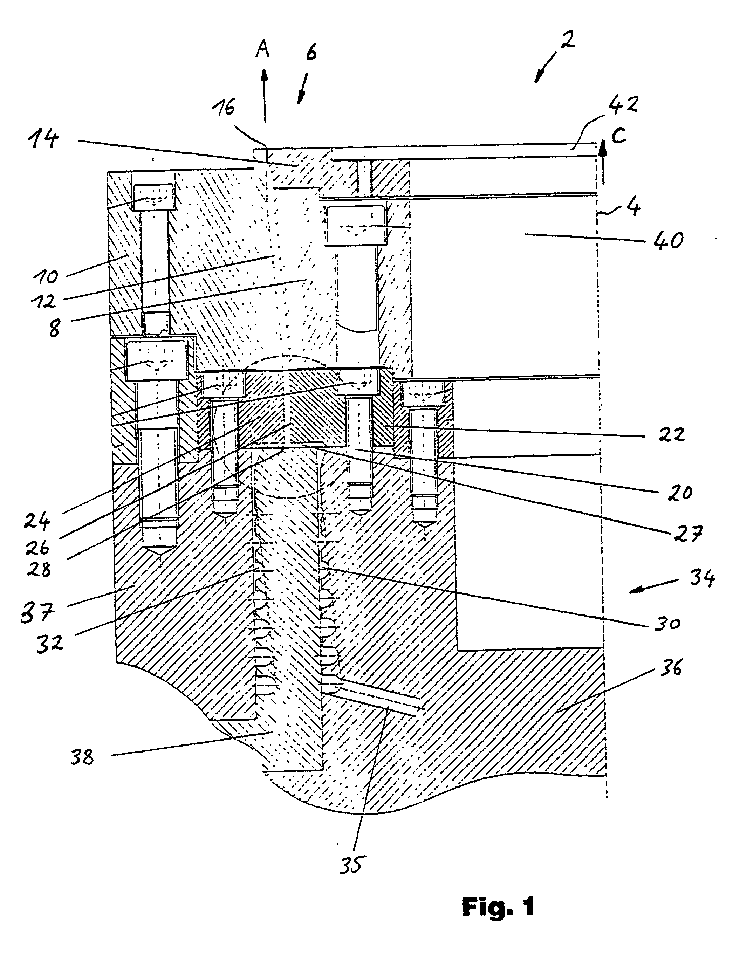

In Figur 1 ist im Längsschnitt ein Folienblaskopf 2 dargestellt, der als rotationssymmetrischer Körper in bezug auf eine Mittelachse 4 ausgebildet ist. Der dargestellte Folienblaskopf 2 wird zur Herstellung von Kunststoff-Folien mittels Extrusion in nachfolgend noch näher beschriebener Weise verwendet.

Der Folienblaskopf 2 enthält ein Extrusionsdüsenelement 6, das ein inneres Bauelement 8 und ein äußeres Bauelement 10 aufweist, wobei beide Bauelemente 8 und 10 in bezug auf die Mittelachse 4 rotationssymmetrisch ausgebildet sind. Die beiden rotationssymmetrischen Bauelemente 8 und 10 sind in einem geringen radialen Abstand voneinander angeordnet, so daß zwischen diesen ein Ringspalt gebildet ist, bei welchem es sich um einen Abgabeschlitz 12 handelt. Stirnseitig (gemäß Figur 1 an der Oberseite) ist das Extrusionsdüsenelement 6 mit einem Abdeckteil 14 versehen, das auf dem inneren Bauteil 8 befestigt ist. Das Abdeckteil 14 weist ebenfalls einen radialen Abstand von dem äußeren Bauelement 10 auf, wobei dieser Abstand jedoch zum Teil kleiner als zwischen den inneren und äußeren Bauteilen 8, 10 ist, wodurch eine schlitzförmige sowie im Querschnitt ringförmige Abgabeöffnung mit einer stirnseitig geringeren radialen Breite als der in die Abgabeöffnung 16 mündende Abgabeschlitz 12 gebildet ist. Die Abgabeöffnung 16 hat zusammen mit dem Abgabeschlitz 12 die Funktion einer Ringdüse in noch später näher zu beschreibender Weise.

Das Extrusionsdüsenelement 6 weist ferner ein Verteilerstück 20 auf, das aus einem inneren Bauteil 22 und einem äußeren Bauteil 24 besteht, wobei beide Bauteile 22 und 24 ebenfalls als rotationssymmetrische Körper in bezug auf die Mittelachse 4 ausgebildet sind. Beide Bauteile 22, 24 des Verteilerstückes 20 sind ebenfalls in einem radialen Abstand zueinander angeordnet, so daß zwischen diesen ein im Querschnitt ringförmiger Schlitz 26 gebildet wird, an den sich der zuvor beschriebene Abgabeschlitz 12 anschließt. Demnach ist das Verteilerstück 20 an der der Abgabeöffnung 16 entgegengesetzten Seite der inneren und äußeren Bauelemente 8 und 10 befestigt.

An der den inneren und äußeren Bauelementen 8 und 10 abgewandten Stirnseite der inneren und äußeren Bauelemente 22 und 24 des Verteilerstückes 20 sind radial verlaufende Aussparungen ausgebildet, die innere und äußere Verteilerkanäle 27 und 28 bilden, welche mit ihrem einen Ende in den zum Abgabeschlitz 12 führenden Schlitz 26 des Verteilerstückes 20 münden. Wie Figur 1 erkennen läßt, erstrecken sich die Verteilerkanäle 27 und 28 in radialer Richtung und rechtwinklig zum ringförmigen Schlitz 26; alternativ ist es aber auch möglich, die Verteilerkanäle 27 und 28 schräg zum ringförmigen Schlitz 26 verlaufend anzuordnen. Mit ihrem anderen Ende kommunizieren die Verteilerkanäle 27, 28 mit inneren und äußeren Zuführungskanälen 30, 32, die in einem Sockel 34 ausgebildet und zur Einspeisung von verschiedenen Materialien für das nachfolgend noch näher zu beschreibende Extrusionsverfahren vorgesehen sind. Die Zuführungskanäle 30, 32 sind im Querschnitt ebenfalls ringförmig in bezug auf die Mittelachse 4 ausgebildet und besitzen ebenfalls die Form von Schlitzen, die allerdings zusätzlich mit in Figur 1 im einzelnen nicht näher bezeichneten, jedoch erkennbaren radialen Ausbuchtungen zur Entspannung des zugeführten Materials versehen sind. An die Zuführungskanäle 30, 32 ist jeweils eine Zuführungsleitung angeschlossen, von denen in Figur 1 nur die Zuführungsleitung 35 für den inneren Zuführungskanal 32 dargestellt ist. Über die Zuführungsleitungen wird das Material dann in die Zuführungskanäle 30 und 32 eingespeist.

Der Sockel 34 weist ein inneres Bauelement 36, ein äußeres Bauelement 37 und ein dazwischenliegendes Zwischenteil 38 auf, wobei alle diese drei Teile 36, 37 und 38 in bezug auf die Mittelachse 4 ebenfalls rotationssymmetrisch ausgebildet sind. An diejenigen Stellen, wo die Zuführungskanäle 30 und 32 verlaufen, sind die Teile 36, 37 und 38 jeweils in einem radialen Abstand voneinander angeordnet, wobei die zuvor erwähnten Ausbuchtungen des inneren Zuführungskanals 30 an der radialen Außenseite des inneren Bauteils 36 und die radialen Ausbuchtungen des äußeren Zuführungskanals 32 an der radialen Außenseite des Zwischenstücks 38 in Form von Aussparungen ausgebildet sind.

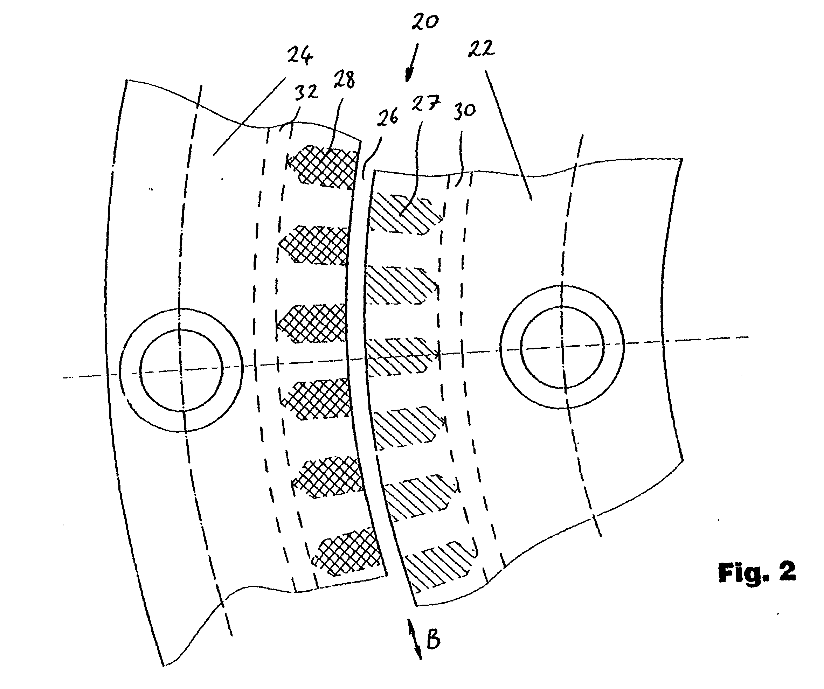

In Figur 2 ist die Anordnung der Verteilerkanäle 27 und 28 im Verteilerstück 20 im einzelnen erkennbar. Wie bereits erwähnt, sind die Verteilerkanäle 27 und 28 als Aussparungen an der von der Austrittsöffnung 16 entfernt gelegenen Stirnseite des Verteilerstückes 20 ausgebildet. Begrenzt werden die Verteilerkanäle 27 und 28 außerdem durch die benachbarte Stirnseite des Zwischenstückes 38 des Sockels 34, wie Figur 1 erkennen läßt. Während die Zuführungskanäle 30 und 32 im Sockel 34 im Querschnitt ringförmig ausgebildet sind und somit - ähnlich wie der Schlitz 26 des Verteilerstückes 20, der Abgabeschlitz 12 und die Abgabeöffnung 16 - als peripher umlaufender Schlitz ausgebildet sind, sind die Verteilerkanäle 27, 28 in Umfangsrichtung jeweils voneinander beabstandet und verlaufen in der dargestellten Ausführung in radialer Richtung. Die inneren Verteilerkanäle 27 sind, wie bereits erwähnt, im inneren Bauteil 22 des Verteilerstückes 20 ausgebildet und verbinden den inneren im Querschnitt ringförmigen Zuführungskanal 30 mit dem im Querschnitt ringförmigen Schlitz 26 des Verteilerstückes 20, während die äußeren Verteilerkanäle 28 im äußeren Bauteil 24 des Verteilerstückes 20 ausgebildet sind und den äußeren Zuführungskanal 32 mit dem Schlitz 26 des Verteilerstückes 20 verbindet.

Die Breite in Umfangsrichtung ist bei allen Verteilerkanälen 27 und 28 in der dargestellten Ausführung gleich; dies gilt ebenfalls für den Abstand zwischen jeweils zwei benachbarten Verteilerkanälen 27 bzw. 28, wobei der Abstand gleich der Breite der Verteilerkanäle 27, 28 in Umfangsrichtung ist. Demnach betragen die Breite jedes Verteilerkanales 27 bzw. 28 sowie der Abstand zwischen jeweils benachbarten Verteilerkanälen 27 bzw. 28 jeweils das gleiche Bogenmaß. Um genau dieses Bogenmaß sind, wie Figur 2 ebenfalls erkennen läßt, die äußeren Verteilerkanäle 28 gegenüber den inneren Verteilerkanälen 27 versetzt angeordnet, so daß sich, bezogen auf den im Querschnitt ringförmigen Schlitz 26, eine alternierende Anordnung der inneren und äußeren Verteilerkanäle 27 und 28 ergibt, wie Figur 2 gut erkennen läßt.

Ferner weist der Folienblaskopf 2 in seiner Mitte einen Hohlraum 40 auf, wie Figur 1 erkennen läßt. Dieser Hohlraum 40 wird insbesondere von den inneren Bauteilen 8 und 36 des Extrusionsdüsenelementes 6 und des Sockels 34 begrenzt, so daß auch der Hohlraum 40 eine rotationssymmetrische Form in bezug auf die Mittelachse 4, und zwar als abgestufter Zylinder, besitzt. Durch diesen Hohlraum 40 wird Luft geblasen, die an der stirnseitigen Öffnung 42 austritt.

Schließlich ist der gesamte Folienblaskopf 2 um seine Mittelachse 4 drehbar gelagert.

Nachfolgend wird ein Folienblasverfahren beschrieben, das mit Hilfe der zuvor erläuterten Vorrichtung durchgeführt wird.

Über die beiden Zuführungskanäle 30 und 32 werden zwei verschiedene Kunststoffe in geschmolzenem Zustand eingespeist. Diese Materialien werden dann im Verteilerstück 20 jeweils über die zugehörigen Verteilerkanäle 27 und 28 in Umfangsrichtung diskret aufgeteilt, bevor sie in den im Querschnitt ringförmigen Schlitz 26 des Verteilerstückes 20 eintreten. Aufgrund der zuvor beschriebenen Anordnung der Verteilerkanäle 27 und 28 treten die beiden unterschiedlichen Materialien in den ringförmigen Schlitz 26 derart ein, daß sie im alternierenden Wechsel in Umfangsrichtung B (Figur 2) nebeneinander liegen und in dieser Konfiguration dann in axialer Richtung gemäß Pfeil A in Figur 1 durch den Schlitz 26 des Verteilerstückes 20 und den sich daran anschließenden Abgabeschlitz 12 in Richtung auf die ringförmige Austrittsöffnung 16 gedrückt werden, wo sie dann in Richtung des Pfeils A gemäß Figur 1 austreten.

Demnach werden die beiden über die Zuführungskanäle 30, 32 eingespeisten unterschiedlichen Materialien im Verteilerstück 20 durch die Verteilerkanäle 27 und 28 entsprechend aufgeteilt und im Schlitz 26 des Verteilerstückes 20 derart zusammengeführt, daß bei Austritt aus der Abgabeöffnung 16 ein schlauchförmiger Folienkörper entsteht, der aus im wesentlichen in axialer Richtung verlaufenden streifenförmigen Abschnitten bzw. Segmenten entsprechend den unterschiedlichen Materialien zusammengesetzt wird. Da das beschriebene Ausführungsbeispiel in der Lage ist, zwei unterschiedliche Materialien für die Extrusion der Folie zu verarbeiten, entstehen erste streifenförmige Abschnitte aus dem ersten Material und zweite streifenförmige Abschnitte aus dem zweiten Material, wobei entsprechend der alternierenden Anordnung der Verteilerkanäle 27 und 28 in Umfangsrichtung B im Verteilerstück 20 (siehe Figur 2) die ersten und zweiten streifenförmigen Abschnitte der Folie in alternierendem Wechsel in Umfangsrichtung angeordnet sind.

Durch Austausch des Verteilerstückes 20, an dessen einer Stirnseite die Verteilerkanäle 27 und 28 ausgebildet sind, ist es möglich, Breite und Anzahl der Verteilerkanäle und somit der sich daraus ergebenden streifenförmigen Abschnitte bzw. Segmente der herzustellenden Folie zu verändern. Ferner können die Verteilerkanäle 27 und 28 so ausgeführt sein, daß sich entweder eine scharfe Trennung oder auch eine partielle Überlappung zwischen benachbarten streifenförmigen Abschnitten ergibt.

Falls während der Extrusion der streifenförmigen Folie der Folienblaskopf 2 um seine Mittelachse 4 rotiert, entsteht eine diagonal verschobene, schraubenförmige Streifenkonfiguration.

Darüber hinaus kann die Vorrichtung so erweitert werden, daß eine weitere Schicht mit streifenförmigen Abschnitten erzeugt wird, indem ein weiterer Folienblaskopf mit einer im Querschnitt ringförmigen Austrittsöffnung konzentrisch und koaxial zu dem in Figur 1 dargestellten Folienblaskopf angeordnet ist. Dieses System sollte dann so ausgebildet sein, daß die zusätzliche Schicht in radialer Richtung auf die Außen-oder Innenfläche der extrudierten schlauchförmigen Folie aufgetragen wird. Vorzugsweise sollte der zusätzliche Blaskopf ebenfalls drehbar gelagert sein und zweckmäßigerweise mit unterschiedlicher Geschwindigkeit und/oder in entgegengesetzter Richtung gegenüber dem vorhandenen Folienblaskopf gedreht werden, wodurch die zusätzlichen streifenförmigen Abschnitte in einem Winkel zu den vorhandenen streifenförmigen Abschnitten aufgetragen werden und insbesondere dadurch eine sogenannte Gitternetz-Konfiguration entsteht.

Nach Austritt aus der Abgabeöffnung 16 wird die extrudierte schlauchförmige Folie aufgebläht, um sie zu dehnen. Hierzu wird durch den zentralen Hohlraum 40 des Folienblaskopf 20 Luft in Richtung des Pfeils C gemäß Figur 1 in das Innere der extrudierten schlauchförmigen Folie geblasen. Der dadurch erhöhte Luftdruck wirkt auf die Innenseite der extrudierten schlauchförmigen Folie und drückt diese radial nach außen. Auf diese Weise wird die Oberfläche der so hergestellten Folie vergrößert und deren Dicke verringert, wodurch sich eine bessere Materialausnutzung ergibt.

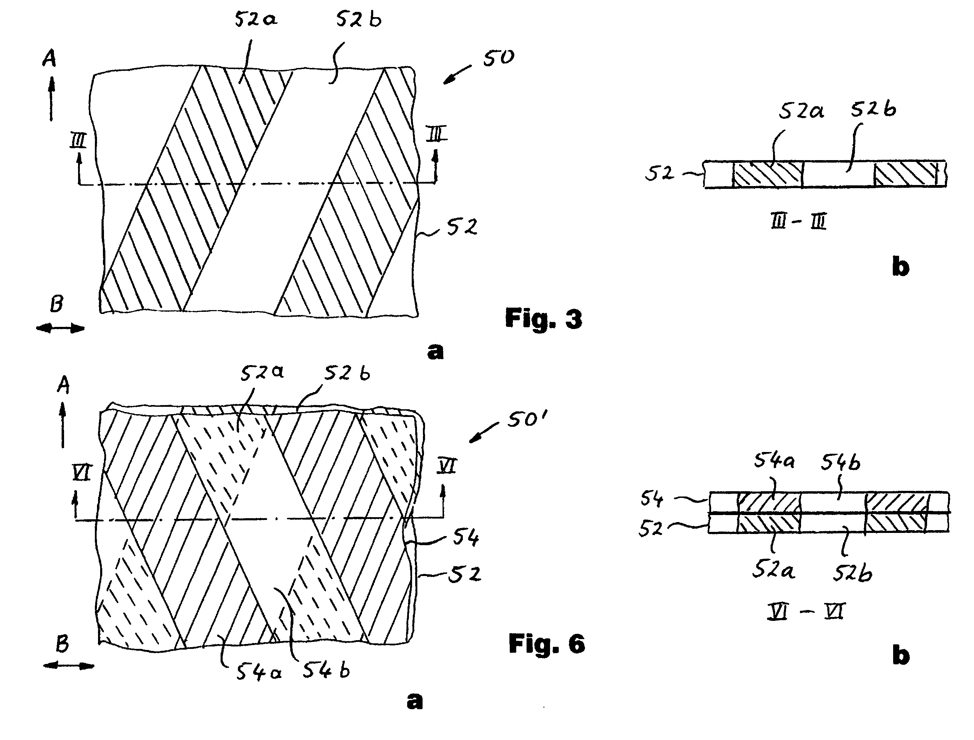

In Figur 3 ist im Ausschnitt eine lage de Folie 50 schematisch dargestellt, die mit der in den Figuren 1 und 2 dargestellten Vorrichtung und dem zuvor beschriebenen Verfahren hergestellt ist. Die dargestellte Lage 52 ist erkennbar aus ersten streifenförmigen Segmenten 52a und zweiten streifenförmigen Segmenten 52b zusammengesetzt. Wie Figur 3 erkennen läßt, verlaufen die streifenförmigen Segmente 52a und 52b in einem Winkel zur Längserstreckung der Folie 50, wobei die Längserstreckung der Ausstoß- bzw. Extrusionsrichtung A entspricht. Wie Figur 3 ferner erkennen läßt, sind die streifenförmigen Abschnitte 52a, 52b in alternierendem Wechsel in Richtung quer zur Längserstreckung entsprechend der Umfangsrichtung B nebeneinanderliegend angeordnet, und zwar derart, daß jeder streifenförmige Abschnitt sich von der Oberseite der Lage 52 zu dessen Unterseite erstreckt, also die jeweiligen Oberflächenbereiche der Ober- und Unterseite ebenfalls bildet. Wie bereits erwähnt, bestehen die ersten streifenförmigen Abschnitte 52a aus einem ersten Material, das beispielsweise, wie Figur 3 erkennen läßt, durchsichtig sein kann, und die zweiten streifenförmigen Abschnitte 52b aus einem zweiten Material, das sich hinsichtlich seiner Eigenschaften vom ersten Material unterscheidet und beispielsweise eine dunkle Farbe aufweisen kann. Insbesondere können sich die unterschiedlichen Materialien hinsichtlich Leitfähigkeit, Elastizität und/oder Farbe unterscheiden, wobei die Vorteile der Eigenschaften der unterschiedlichen Materialien je nach Anwendungsfall kombiniert werden können. In einer gegenwärtig besonders bevorzugten Anwendung besteht das die zweiten streifenförmigen Abschnitte 52b bildende zweite Material aus einem nichtleitenden Kunststoff und das die ersten streifenförmigen Abschnitte 52a bildende erste Material aus einem leitenden Kunststoff, der beispielsweise Kohlestaub enthält und im übrigen dadurch schwarz gefärbt ist.

Der in den Figuren 1 und 2 dargestellte Vorrichtung zur Herstellung einer Gitternetz-Folie ist eine zusätzliche in den Figuren nicht dargestellte Dubliereinrichtung nachgeschaltet , in der der extrudierte und anschließend aufgeblasene und somit in radialer Richtung gedehnte schlauchförmige Folienkörper derart flächig zusammmengefaltet bzw. -gelegt wird, daß seine beiden Hälften aufeinander gelegt werden. Hierzu weist die Dubliereinrichtung vorzugsweise ein Walzenpaar auf, dessen Walzen mit ihren Drehachsen parallel zueinander angeordnet sind und sich unter einem gewissen Anpreßdruck berühren. Der extrudierte schlauchförmige Folienkörper wird nun zwischen diesen Walzen hindurchgeführt, wodurch die beiden Hälften des schlauchförmigen Folienkörpers in gegenseitige flächige Anlage aneinander gebracht werden. Das Walzenpaar bewirkt gleichzeitig einen dichtenden Abschluß des schlauchförmigen Folienkörpers, so daß dort keine Luft beim Aufblasen des schlauchförmigen Folienkörpers nach der Extrusion entweichen kann, so daß die Dubliereinrichtung auch noch in vorteilhafterweise den Blasvorgang unterstützt.

Das Besondere der Dubliereinrichtung besteht darin, daß die beiden Hälften des schlauchförmigen Folienkörpers nicht nur flächig aufeinandergelegt, sondern auch miteinander verbunden werden. Die flächige Verbindung der beiden Hälften des schlauchförmigen Folienkörpers miteinander erfolgt vorzugsweise durch Verkleben oder Verschweißen, wozu eine entsprechende Klebe- oder Schweißeinrichtung in den Walzen selbst oder an deren Ausgang vorgesehen ist.

Auf diese Weise entsteht eine zweilagige Folie, deren beide Lagen aus den beiden Hälften des ursprünglich schlauchförmig extrudierten Folienkörpers entsprechend gebildet sind. Für die gewünschte Gitternetzstruktur ist es erforderlich, daß während der Extrusion des schlauchförmigen Folienkörpers der Folienblaskopf 2 um seine Mittelachse 4 rotiert, wodurch der extrudierte schlauchförmige Folienkörper eine diagonal verschobene, schraubenförmige Streifenkonfiguration erhält, indem die über den Umfang des schlauchförmigen Folienkörpers verteilten streifenförmigen Abschnitte schräg zur Extrusionsrichtung A und spiralförmig um die mit der Mittelachse 4 des Folienblaskopfes 2 zusammenfallende Mittelachse des extrudierten schlauchförmigen Folienkörpers laufen. Werden in der Dubliereinrichtung die beiden Hälften des schlauchförmigen Körpers dann aufeinandergelegt und flächig miteinander verbunden, entsteht eine Gitternetz-Konfiguration, bei welcher der in der einen Hälfte des schlauchförmigen Folienkörpers enthaltene Teil der streifenförmigen Abschnitte in einem Winkel und gleichzeitig spiegelsymmetrisch zum in der anderen Hälfte des schlauchförmigen Folienkörpers enthaltenen Teil der streifenförmigen Abschnitte verläuft.

Anstelle der Extrusion eines schlauchförmigen Folienkörpers und der anschließenden Dublierung durch eine Dubliereinrichtung ist es auch möglich, die Extrusionsvorrichtung mit zwei koaxial zueinander angeordneten Ringdüsenelementen zu versehen, welche relativ oder entgegengesetzt zueinander rotieren.

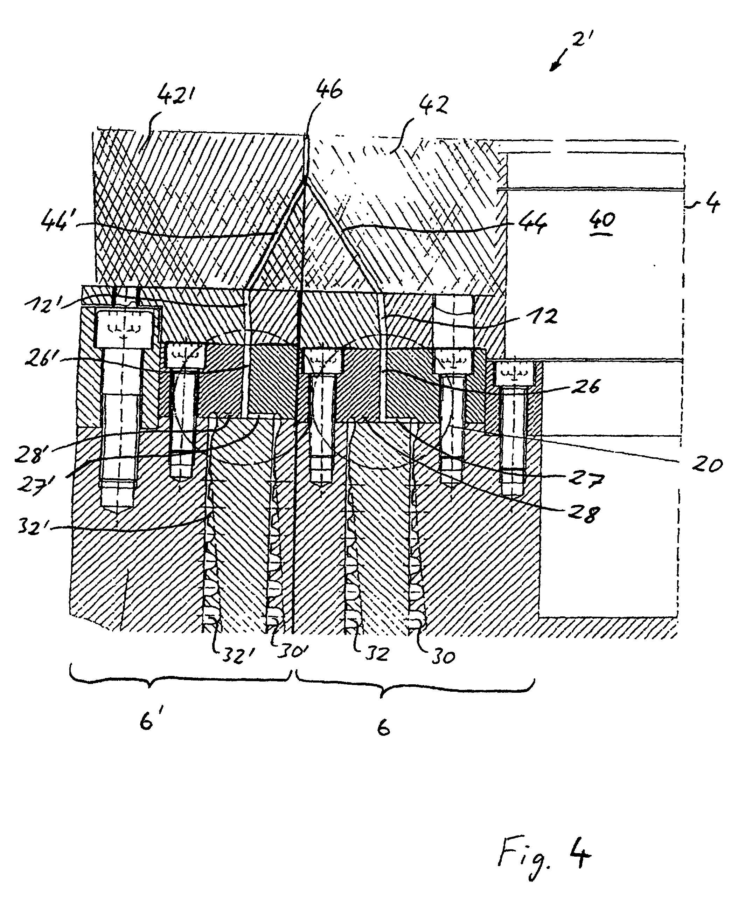

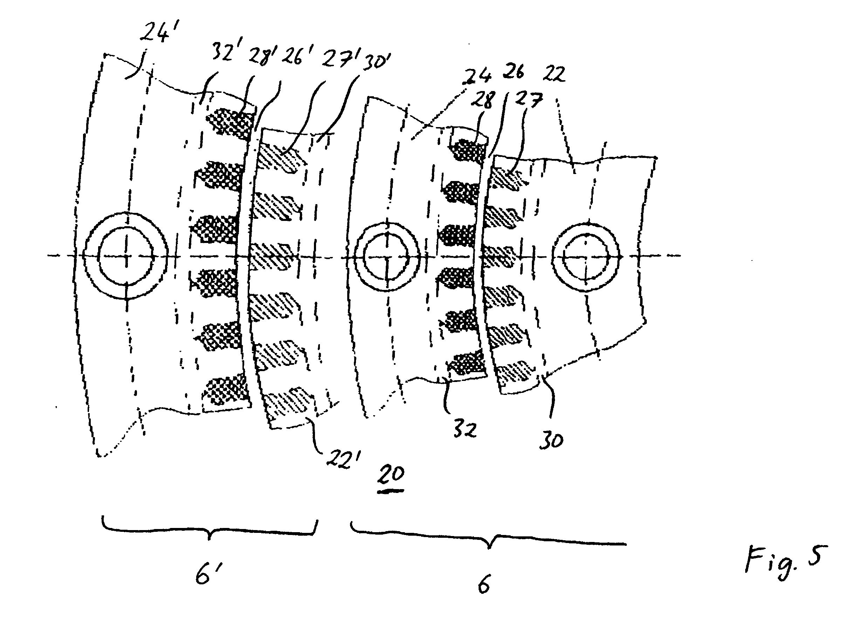

Eine solche Extrusionsvorrichtung ist in den Figuren 4 und 5 dargestellt.

Im Gegensatz zu der Vorrichtung gemäß Figur 1 und 2, welche nur ein einziges Ringdüsenelement 6 aufweist, ist beim Folienblaskopf 2' gemäß Figur 4 und 5 zusätzlich zu einem inneren ersten Ringdüsenelement 6 ein äußeres zweites Ringdüsenelement 6' vorgesehen. Bei beiden Ringdüsenelementen 2 und 2' handelt es sich wiederum um im wesentlichen rotationssymmetrische Körper, die in bezug auf die Mittelachse 4 koaxial zueinander angeordnet sind, wobei das äußere zweite Ringdüsenelement 6' das innere erste Ringdüsenelement 6 umgibt. Beide Ringdüsenelemente 6 und 6' sind außerdem um die Mittelachse 4 drehbar gelagert.

Das innere erste Ringdüsenelement 6 hat exakt den gleichen Aufbau wie das in den Figuren 1 und 2 dargestellte Ringdüsenelement 6, so daß gleiche Komponenten mit den gleichen Bezugszeichen gekennzeichnet sind und im übrigen hinsichtlich der Einzelheiten seines Aufbaus auf die Figuren 1 und 2 und die zugehörige Beschreibung verwiesen wird. Auch hier sind die Zuführungskanäle 30 und 32 mit dem Schlitz 26 über radiale Verteilerkanäle 27, 28 verbunden. An den Schlitz 26 schließt sich ein weiterer Schlitz 12 an, der allerdings im Gegensatz zu der Vorrichtung gemäß den Figuren 1 und 2 nicht die Funktion eines Abgabeschlitzes hat. Im Gegensatz zu der Vorrichtung gemäß den Figuren 1 und 2 fehlt auch das Abdeckteil 14. Stattdessen ist an der Stirnseite des Ringdüsenelementes 6 ein erster Vorsatz 42 angeordnet, der einen als umlaufender Schlitz ausgebildeten Verbindungskanal 44 enthält, in welchen der Schlitz 12 mündet.

Auch das äußere zweite Ringdüsenelement 6' entspricht in seinem Aufbau im wesentlichen dem Ringdüsenelement 6 gemäß den Figuren 1 und 2, so daß die Komponenten des äußeren zweiten Ringdüsenelementes 6' mit den gleichen Bezugszeichen wie die entsprechenden Komponenten des inneren ersten Ringdüsenelementes 6 bzw. des in den Figuren 1 und 2 dargestellten Ringdüsenelementes 6 gekennzeichnet sind, wobei allerdings zur Unterscheidung die Bezugszeichen zusätzlich noch mit einem Apostroph versehen sind. Im Gegensatz zum inneren ersten Ringdüsenelement 6 bzw. dem Ringdüsenelement 6 gemäß den Figuren 1 und 2 weist beim äußeren zweiten Ringdüsenelement 6' die Anordnung aus den Zuführungskanälen 30', 32', den Verteilerkanälen 27', 28' und den Schlitzen 26' und 12' einen größeren radialen Abstand zur gemeinsamen Mittelachse 4 auf und ist im inneren Hohlraum das innere erste Ringdüsenelement 6 angeordnet, wie Figur 4 erkennen läßt. Hinsichtlich weiterer Einzelheiten des Aufbaus des Ringdüsenelementes 6' wird auch hier im übrigen auf die Figuren 1 und 2 und die zugehörige Beschreibung verwiesen.

Im Gegensatz zu dem in den Figuren 1 und 2 dargestellten Ringdüsenelement 6 ist auch bei dem äußeren zweiten Ringdüsenelement 6' das Abdeckteil 14 nicht vorhanden, sondern in gleicher Weise wie bei dem inneren ersten Ringdüsenelement 6 an der Stimseite ein zweiter Vorsatz 42' angeordnet, der einen als ringförmig umlaufenden Schlitz ausgebildeten zweiten Verbindungskanal 44' enthält, in den der Schlitz 12' mündet, der hier ebenfalls nicht als Ausgabeschlitz fungiert.

Die ersten und zweiten Verbindungskanäle 44 und 44' münden in einen gemeinsamen Ausgabeschlitz 46, der von den einander zugewandten Wänden der ersten und zweiten Vorsätze 42 und 42' begrenzt wird. Die Schlitze 26 und 12 sowie der erste Verbindungskanal 44 im inneren ersten Ringdüsenelement 6 haben jeweils die gleiche radiale Breite. Dies gilt auch für die Schlitze 26' und 12' und den zweiten Verbindungskanal 44' im äußeren zweiten Ringdüsenelement 6'. Die radiale Breite des gemeinsamen Abgabeschlitzes 46 entspricht im wesentlichen der Summe der radialen Breiten der ersten und zweiten Verbindungskanäle 44 und 44'.

In den beiden Ringdüsenelementen 6 und 6' wird jeweils in der zuvor beschriebenen Weise eine streifenförmige Folienlage erzeugt, wobei bei Austritt aus den Schlitzen 12 und 12' die streifenförmige Folienlage sich noch in geschmolzenem Zustand befindet. Die im inneren ersten Ringdüsenelement 6 erzeugte und die erste streifenförmige Lage bildende Schmelze wird durch den ersten Verbindungskanal 44 in den gemeinsamen Abgabeschlitz 46 und gleichzeitig die im äußeren zweiten Ringdüsenelement 6' erzeugte und die zweite streifenförmige Lage bildende Schmelze durch den zweiten Verbindungskanal 44 in den gemeinsamen Abgabeschlitz 46 gedrückt. Demnach werden die ersten und zweiten Schmelzen im gemeinsamen Abgabeschlitz 46 zusammengeführt, und zwar derart, daß sie nebeneinanderliegen und bei Austritt aus der Extrusionsvorrichtung gemeinsam einen zweilagigen Folienkörper bilden, indem die beiden Lagen durch Verschmelzung im Abgabeschlitz 26 einstückig miteinander verbunden sind.

Zur Erzeugung der gewünschten Gitternetzstruktur werden die beiden Ringdüsenelemente 6 und 6' relativ zueinander gedreht. Vorzugsweise rotieren die beiden Ringdüsenelemente 6 und 6' in entgegengesetzter Richtung zueinander. Es ist aber gleichwohl auch denkbar, nur den einen der beiden Ringdüsenelemente rotieren und den anderen stationär zu lassen; in einem solchen Fall entsteht eine Folie mit in Extrusionsrichtung verlaufenden streifenförmigen Abschnitten in der einen Lage und hierzu schräg verlaufenden streifenförmigen Abschnitten in der anderen Lage.

In Figur 6 ist eine zweilagige Folie 50' schematisch dargestellt, wie sie in der zuvor beschriebenen Weise beispielsweise entweder durch Dublierung eines extrudierten schlauchförmigen Folienkörpers oder mit Hilfe der Vorrichtung gemäß den Figuren 4 und 5 hergestellt werden kann. Bei dieser Folie 50' ist auf die Lage 52, die bereits in Figur 3 gezeigt ist, eine zweite Lage 54 flächig aufgebracht, die im dargestellten Ausführungsbeispiel ebenfalls aus zwei im alternierenden Wechsel nebeneinander angeordneten streifenförmigen Abschnitten 54a und 54b aus jeweils unterschiedlichen Materialien zusammengesetzt ist. Beispielsweise kann der erste streifenförmige Abschnitt 54a der zweiten Lage 54 aus dunklem Material und der zweite streifenförmige Abschnitt 54b der zweiten Lage 54 aus durchsichtigem Material bestehen, wie Figur 6 erkennen läßt. Wie bei der ersten Lage 52 kann natürlich auch die Wahl der unterschiedlichen Materialien für die zweite Lage 54 beliebig sein. Im übrigen wird ergänzend auf die Beschreibung der Figur 3 verwiesen.

Die in Figur 6 gezeigte zweilagige Folie 50' mit Gitternetzstruktur kann vorzugsweise zu Verpackungszwecken von elektrostatisch empfindlichen Gegenständen verwendet werden. In einem solchen Fall wird für die ersten streifenförmigen Abschnitte 52a und 54a der ersten und zweiten Lagen 52 und 54 ein leitfähiger Kunststoff verwendet, während die zweiten streifenförmigen Abschnitte 52b und 54b aus nichtleitendem Material gebildet sind. Da die aus den unterschiedlichen Materialien gebildeten Abschnitte nebeneinanderliegen und sich somit jeweils über die gesamte Dicke der Folie 50' erstsrecken, stehen die leitfähigen Abschnitte der beiden Lagen 52, 54 an denjenigen Stellen, wo sie sich schneiden, in mechanischem und somit auch elektrischem Kontakt miteinander. An diesen "Knoten" entstehen Spannungsfelder zur Beseitigung von elektrostatischen Aufladungen in Bereichen zwischen jenen leitfähigen Abschnitten. Dabei sollten Anzahl und Dichte dieser Knoten vorzugsweise so bemessen sein, daß die elektrostatischen Aufladungen möglichst vollständig in den Bereichen zwischen den leitfähigen Abschnitten abgebaut werden können.

Soll die in den Figuren 3 und 6 dargestellte Folie 50 und 50' zur Verpackung von Lebensmitteln verwendet werden, sollte zusätzlich noch eine in den Figuren nicht dargestellte dünne Schicht auf derjenigen Seite aufgetragen werden, die mit den Lebensmitteln in Berührung gelangt.

Abschließend sei darauf hingewiesen, daß das beschriebene System nicht auf bestimmte Materialien begrenzt ist. Dies gilt auch für die Anzahl der verwendeten unterschiedlichen Materialien. Ferner können auch andere Anordnungen der Verteilerkanäle im Verteilerstück 20 gewählt werden; beispielsweise ist es auch denkbar, sämtliche Verteilerkanäle 27, 28 nur an einer Seite des Schlizes 26 vorzusehen, also beispielsweise nur im inneren Bauteil 22 oder im äußeren Bauteil 24 des Verteilerstückes 20, sofern damit eine Folie mit nebeneinanderliegenden Abschnitten aus unterschiedlichen Materialien hergestellt werden kann. Auch ist das beschriebene System nicht auf die Breite und Anzahl der Verteilerkanäle und der sich daraus ergebenden Abschnitte der zu extrudierenden Folie begrenzt.

## Patentansprüche

1. Verfahren zur Herstellung von flächigen, insbesondere folienartigen, Teilen aus mindestens zwei unterschiedlichen Materialien, insbesondere Kunststoffen, mittels Extrusion, indem die Materialien in geschmolzenem Zustand im wesentlichen in Richtung der Quererstreckung (B) eines zu extrudierenden Teiles (50; 50') sowie quer zur Ausstoßrichtung (A) nebeneinanderliegend aus der Extrusionsvorrichtung (6) gleichzeitig ausgestoßen werden, mit den Schritten, die Materialien in geschmolzenem Zustand derart aus der Extrusionsvorrichtung (6) auszustoßen, dass eine erste Lage (52) entsteht und dabei die unterschiedlichen Materialien nebeneinanderliegende Abschnitte (52a, 52b) der ersten Lage bilden, und die Materialien in geschmolzenem Zustand zusätzlich aus der Extrusionsvorrichtung (6) so auszustoßen, dass neben der ersten Lage (52) gleichzeitig mindestens eine separate zweite Lage (54) entsteht, bei der die unterschiedlichen Materialien ebenfalls nebeneinanderliegende Abschnitte (54a, 54b) bilden, die jedoch winklig zu den Abschnitten (52a, 52b) der ersten Lage (52) verlaufen, und die Lagen (52, 54) anschließend flächig miteinander zu verbinden.

2. Verfahren nach Anspruch 1,
bei welchem die unterschiedlichen Materialien so ausgestoßen werden, dass die von ihnen gebildeten Abschnitte (52a, 52b; 54a, 54b) jeweils im wesentlichen streifenförmig sind.

3. Verfahren nach Anspruch 1 oder 2,
bei welchem die unterschiedlichen Materialien so ausgestoßen werden, dass die von ihnen gebildeten Abschnitte (52a, 52b; 54a, 54b) parallel zueinander verlaufen.

4. Verfahren nach mindestens einem der Ansprüche 1 bis 3,
bei welchem die Lagen miteinander verklebt oder verschweißt werden.

5. Verfahren nach mindestens einem der Ansprüche 1 bis 4,
bei welchem die Lagen Innerhalb der Extrusionsvorrichtung vor Austritt aus dieser miteinander verbunden werden.

6. Verfahren nach mindestens einem der Ansprüche 1 bis 5,
bei welchem die Materialien für die Bildung der ersten Lage aus einem ersten Extrusionsdüsenelement und die Materialien für die Bildung der zweiten Lage aus einem zweiten Extrusionsdüsenelement ausgestoßen werden und eine Relativbewegung des einen Extrusionsdüsenelementes gegenüber dem anderen Extrusionsdüsenelement quer zur Extrusionsrichtung erzeugt wird.

7. Verfahren nach mindestens einem der Ansprüche 1 bis 5,
bei welchem die Materialien in geschmolzenem Zustand aus der Extrusionsvorrichtung (6) derart ausgestoßen werden, dass zunächst ein schlauchförmiger Körper entsteht und dabei die unterschiedlichen Materialien im wesentlichen in dessen Umfangsrichtung (B) nebeneinanderliegende und schräg zur Extrusionsrichtung (A) verlaufende Abschnitte (52a, 52b; 54a, 54b) bilden und anschließend die die erste und zweite Lage bildenden beiden Hälften (52, 54) des schlauchförmigen Körpers flächig miteinander verbunden werden.

8. Verfahren nach Anspruch 7, bei welchem die Materialien aus mindestens einem Ringdüsenelement (6) ausgestoßen werden und das Ringdüsenelement (6) um eine im wesentlichen in Extrusionsrichtung (A) verlaufende Achse (4) rotiert.

9. Verfahren nach Anspruch 7 oder 8,
bei welchem der schlauchfömnige Körper radial gedehnt wird, bevor dessen Hälften miteinander verbunden werden.

10. Verfahren nach mindestens einem der Ansprüche 1 bis 9,
bei welchem hinsichtlich Leitfähigkeit, Elastizität und/oder Farbe unterschiedliche Materialien verwendet werden.

11. Verfahren nach mindestens einem der Ansprüche 1 bis 10,
bei welchem zur Bildung der unterschiedlichen Abschnitte ein elektrisch leitendes erstes Material und ein nichtleitendes zweites Material verwendet wird.

12. Durch Extrusion, insbesondere mit Hilfe eines Verfahrens nach mindestens einem der vorangegangenen Ansprüche, hergestelltes flächiges, insbesondere folienartiges, Teil aus mindestens zwei unterschiedlichen Materialien, insbesondere Kunststoffen, die in einer ersten Lage (52) des flächigen Teils (50; 50') nebeneinanderliegende Abschnitte (52a, 52b) bilden,
mit mindestens einer mit der ersten Lage (52) flächig verbundenen zweiten Lage (54), die ebenfalls aus mindestens zwei unterschiedllchen Materialien besteht, die in der zweiten Lage (54) ebenfalls nebeneinanderliegende Abschnitte (54a, 54b) bilden, wobei die nebeneinander liegenden Abschnitte (52a, 52b) der ersten Lage (52) in einem Winkel zu denen (54a, 54b) der zweiten Lage (54) verlaufen.

13. Teil nach Anspruch 12,
bei welchem die Abschnitte (52a, 52b; 54a, 54b) streifenförmig ausgebildet sind.

14. Teil nach Anspruch 12 oder 13,
bei welchem die Abschnitte (52a, 52b; 54a, 54b) winklig zur Längserstreckung (A) des flächigen Teils (50; 50') entsprechend der Extrusionsrichtung (A) verlaufen.

15. Teil nach mindestens einem der Ansprüche 12 bis 14,
bei welchem die Lagen einstückig miteinander verbunden sind.

16. Teil nach mindestens einem der Ansprüche 12 bis 15,
bei welchem sich die verschiedenen Materialien hinsichtlich Leitfähigkeit, Elastizität und/oder Farbe unterscheiden.

17. Teil nach mindestens einem der Ansprüche 12 bis 16,
bei welchem die einen Abschnitte aus einem elektrisch leitenden ersten Material und die anderen Abschnitte aus einem nichtleitenden zweiten Material bestehen.

18. Vorrichtung zur Herstellung von aus mindestens zwei unterschiedlichen Materialien, insbesondere Kunststoffen, bestehenden flächigen, insbesondere folienartigen, Teilen (50), mittels Extrusion, insbesondere zur Durchführung eines Verfahrens nach mindestens einem der Ansprüche 1-11, bei welcher mehrere Materialaustrittsdffnungen (27, 28) zur Abgabe unterschiedlicher Materialien in geschmolzenem Zustand quer zur Ausstoßrichtung (A) eines zu extrudierenden schlauchförmigen Teiles in einem Ringdüsenelement (6) nebeneinander in Reihe angeordnet sind und jeweils ein bestimmtes Material aus einer bestimmten Materialaustrittsöffnung abgegeben wird; das Ringdüsenelement (6) im wesentlichen in Richtung (B) der Anordnung der Materialaustrittsöffnungen (27, 28) sowie quer zur Ausstoßrichtung (A) des zu extrudierenden schlauchförmigen Teiles bewegbar ist,
und eine Dubliereinrichtung nachgeschaltet ist, in der das extrudierte schlauchförmige Teil derart flächig zusammengefaltet bzw. -gelegt wird, dass seine beiden Hälften aufeinander gelegt und verbunden werden.

19. Vorrichtung nach Anspruch 18, bei welcher das Ringdüsenefement (6) einen im Querschnitt im wesentlichen ringförmigen Abgabeschlitz (12, 26) für den Ausstoß des extrudierten flächigen Teils (50; 50') aufweist.

20. Vorrichtung nach Anspruch 19, bei welcher das Ringdüsenelement (6) um die Mittelpunktachse (4) des im wesentlichen ringförmigen Abgabeschlitzes (12, 26) rotierbar ist.

21. Vorrichtung zur Herstellung von aus mindestens zwei unterschiedlichen Materialien, insbesondere Kunststoffen, bestehenden flächigen, insbesondere folienartigen, Teilen (50'), mittels Extrusion, insbesondere zur Durchführung eines Verfahrens nach mindestens einem der Ansprüche 1 bis 11,
mit mindestens einer ersten und einer zweiten Gruppe von Materialaustrittsöffnungen (27, 28, 27', 28') zur Abgabe unterschiedlicher Materialien in geschmolzenem Zustand,
wobei jeweils ein bestimmtes Material aus einer bestimmten Materialaustrittsöffnung abgegeben wird,
wobei die Materialaustrittsöffnung (27, 28) der ersten Gruppe quer zur Ausstoßrichtung (A) eines zu extrudierenden Teiles in einem ersten Düsenelement (6) nebeneinander in Reihe angeordnet sind und die Materiala strittsöffnungen (27', 28') der zweiten Gruppe quer zur Ausstoßrichtung (A) des zu extrudierenden Teiles in einem zweiten Düsenelement (6) nebeneinander in Reihe angeordnet sind, und
wobei die Düsenelemente (6, 6') im wesentlichen in Richtung (B) der Anordnung der Materialaustrittsöffnungen (27, 28, 27', 28') sowie quer zur Ausstoßrichtung (A) des zu extrudierenden Teiles relativ zueinander bewegbar sind, und
wobei die erste Gruppe von Materialaustrittsöffnungen (27, 28) für die Herstellung einer ersten Lage (52) des flächigen Teils und (50') die zweite Gruppe von Materialaustrittsöffnungen (27', 28') für die Herstellung einer zweiten Lage (54) des flächigen Teils (50') vorgesehen sind,
und mit einer Einrichtung zum flächigen Verbinden der Lagen (52, 54).

22. Vorrichtung nach Anspruch 21, bei welcher die Düsenelemente (6; 6') als Ringdüsenelemente mit einem im Querschnitt im wesentlichen ringförmigen Abgabeschlitz (12, 26, 12', 26') für den Ausstoß des extrudierten flächigen Teils (50') ausgebildet sind.

23. Vorrichtung nach Anspruch 22, bei welcher die Ringdüsenelemente (6, 6') um die Mittelpunktachse (4) des im wesentlichen ringförmigen Abgabeschlitzes (12, 26, 12', 26') rotierbar ist.

24. Vorrichtung nach Anspruch 22 oder 23, bei welcher die im wesentlichen ringförmigen Abgabeschlitze (12, 26, 12', 26') der Ringdüsenelemente (6, 6') im wesentlichen konzentrisch und koaxial zueinander angeordnet sind.

25. Vorrichtung nach mindestens einem der Ansprüche 21 bis 24, bei welcher jede Gruppe von Materialaustrittsöffnungen über einen separaten Verbindungskanal (44, 44'), mit einem gemeinsamen Abgabekabel (46) verbunden ist.

26. Vorrichtung nach mindestens einem der Ansprüche 21 bis 25, bei welcher jede Gruppe von Materialaustrittsöffnungen aus einer bestimmten Anzahl von Materialaustrittsöffnungen für jedes der abzugebenden unterschiedlichen Materialien besteht.

27. Vorrichtung nach mindestens einem der Ansprüche 18 bis 26, mit mindestens einem Abgabekanal (26), der durch erste und zweite voneinander beabstandete Wände gebildet ist, wobei
die Materialaustrittsöffnungen (27, 28) in mindestens einer der Wände des Abgabekanals (26) ausgebildet sind.

28. Vorrichtung nach Anspruch 27,
**dadurch gekennzeichnet, dass** die Materialaustrittsöffnungen (27, 28) in beiden Wänden des Abgabekanals (26) ausgebildet sind.

29. Vorrichtung nach Anspruch 27 oder 28, bei welcher die ersten Materialaustrittsöffnungen (27) zur Abgabe eines ersten Materials in der ersten Wand des Abgabekanals (26) und die zweiten Materialaustrittsöffnungen (28) zur Abgabe eines zweiten Materials in der zweiten Wand des Abgabekanals (26) ausgebildet sind.

30. Vorrichtung nach mindestens einem der Ansprüche 27 bis 29, mit einem auswechselbaren Verteilerstück (20), in dem die Materialaustrittsöffnungen (27, 28) in den Abgabekanal (26) münden.

## Claims

1. Method for producing flat, in particular foil-type parts from at least two different materials, in particular synthetic materials, by means of extrusion, in that the materials are ejected from the extrusion device (6) simultaneously located side by side in molten state substantially in the direction of the transverse extension (B) of a part (50; 50') to be extruded and transversely to the direction of ejection (A), with the steps of extruding the materials from the extrusion device (6) in molten state in such a way that a first layer (52) arises and therein the different materials form sections (52a, 52b) of the first layer, located side by side, and additionally ejecting the materials from the extrusion device (6) in molten state in such a way that, as well as the first layer (52), simultaneously at least one separate second layer (54) arises, in which the different materials also form sections (54a, 54b), located side by side, which, however, run at an angle to the sections (52a, 52b) of the first layer (52), and then connecting the layers (52, 54) flat to one another.

2. Method according to claim 1, in which the different materials are ejected in such a way that the sections (52a, 52b; 54a, 54b) formed by them are in each case substantially in the form of strips.

3. Method according to claim 1 or 2, in which the different materials are ejected in such a way that the sections (52a, 52b; 54a, 54b) formed by them run parallel to one another.

4. Method according to at least one of claims 1 to 3, in which the layers are glued or welded to one another.

5. Method according to at least one of claims 1 to 4, in which the layers are connected to one another inside the extrusion device before exit therefrom.

6. Method according to at least one of claims 1 to 5, in which the materials for forming the first layer are ejected from a first extrusion die element and the materials for forming the second layer from a second extrusion die element and a relative movement of one extrusion die element in respect of the other extrusion die element is generated transversely to the direction of extrusion.

7. Method according to at least one of claims 1 to 5, in which the materials are ejected from the extrusion device (6) in molten state in such a way that first a tube-shaped body arises and therein the different materials form sections (52a, 52b; 54a, 54b), located side by side substantially in the circumferential direction (B) thereof and running diagonally to the direction of extrusion (A) and then the two halves (52, 54) of the tube-shaped body forming the first and second layers are connected flat to one another.

8. Method according to claim 7, in which the materials are ejected from at least one tubular die element (6) and the tubular die element (6) rotates about an axis (4) substantially running in the direction of extrusion (A).

9. Method according to claim 7 or 8, in which the tube-shaped body is stretched radially before its halves are connected to one another.

10. Method according to at least one of claims 1 to 9, in which different materials are used in respect of conductibility, elasticity and/or colour.

11. Method according to at least one of claims 1 to 10, in which an electrically conducting first material and a non-conducting second material are used for forming the different sections.

12. Flat, in particular foil-type part, produced in particular with the aid of a method according to at least one of the preceding claims, made of at least two different materials, in particular synthetic materials, which in a first layer (52) of the flat part (50; 50') form sections (52a, 52b) side by side, with, connected flat to the first layer (52), at least one second layer (54) which also consists of at least two different materials, also forming in the second layer (54) sections (54a, 54b) located side by side, wherein the sections (52a, 52b) of the first layer (52) located side by side run at an angle to those (54a, 54b) of the second layer (54).

13. Part according to claim 12, in which the sections (52a, 52b; 54a, 54b) are constructed in the shape of strips.

14. Part according to claim 12 or 13, in which the sections (52a, 52b; 54a, 54b) run at an angle to the longitudinal extension (A) of the flat part (50; 50') corresponding to the direction of extrusion (A).

15. Part according to at least one of claims 12 to 14, in which the layers are connected to one another in one piece.

16. Part according to at least one of claims 12 to 15, in which the various materials differ from one another in respect of conductibility, elasticity and/or colour.

17. Part according to at least one of claims 12 to 16, in which some sections consist of an electrically conducting first material and the other sections of a non-conducting second material.

18. Device for producing flat, in particular foil-type parts (50), consisting of at least two different materials, in particular synthetic materials, by means of extrusion, in particular for carrying out a method according to at least one of claims 1 to 11, in which several material exit openings (27, 28) for delivery of different materials in molten state are arranged side by side in a row in a tubular die element (6) transversely to the direction of ejection (A) of a tube-shaped part to be extruded and in each case a specific material is delivered from a specific material exit opening; the tubular die element (6) can be moved substantially in direction (B) of the arrangement of material exit openings (27, 28) and also transversely to the direction of ejection (A) of the tube-shaped part to be extruded, and a doubling device is connected downstream in which the extruded tube-shaped part is folded or placed together flat in such a way that its two halves are placed on top of one another and connected.

19. Device according to claim 18 in which the tubular die element (6) has a delivery slot (12, 26), which is substantially ring-shaped in cross-section, for ejection of the extruded flat part (50; 50').

20. Device according to claim 19 in which the tubular die element (6) is rotatable about the central point axis (4) of the substantially ring-shaped delivery slot (12, 26).

21. Device for producing flat, in particular foil-type parts (50) consisting of at least two different materials, in particular synthetic materials, by means of extrusion, in particular for carrying out a method according to at least one of claims 1 to 11, with at least one first and one second group of material exit openings (27, 28, 27', 28') for delivery of different materials in molten state, wherein in each case a specific material is delivered from a specific material exit opening, wherein the material exit openings (27, 28) of the first group are arranged side by side in a row in a first die element (6) transversely to the direction of ejection (A) of a part to be extruded and the material exit openings (27', 28') of the second group are arranged side by side in a row in a second die element (6) transversely to the direction of ejection (A) of the part to be extruded and wherein the die elements (6, 6')) can be moved relative to one another substantially in direction (B) of the arrangement of material exit openings (27, 28, 27', 28') and also transversely to the direction of ejection (A) of the part to be extruded, and wherein the first group of material exit openings (27', 28') are provided for producing a first layer (52) of the part and the second group of material exit openings (27', 28') are provided for producing a second layer (54) of the part, with a device for flat connecting of the layers (52, 54).

22. Device according to claim 21, in which the die elements (6; 6') are constructed as tubular die elements with a delivery slot (12, 26, 12', 26'), substantially ring-shaped in cross-section, for the ejection of the extruded flat part (50').

23. Device according to claim 22, in which the tubular die elements (6; 6') are rotatable about the central point axis (4) of the substantially ring-shaped delivery slot (12, 26, 12', 26').

24. Device according to claim 22 or 23, in which the substantially ring-shaped delivery slots (12, 26, 12', 26') of the tubular die elements (6; 6') are arranged substantially concentric and coaxial to one another.

25. Device according to at least one of claims 21 to 24, in which each group of material exit openings is connected to a common delivery cable (46) via a separate connecting channel (44, 44').

26. Device according to at least one of claims 21 to 25, in which each group of material exit openings consists of a specific number of material exit openings for each of the different materials to be delivered.

27. Device according to at least one of claims 18 to 26, with at least one delivery channel (26), formed by first and second walls spaced apart, wherein the material exit openings (27, 28) are constructed in at least one of the walls of the delivery channel (26).

28. Device according to claim 27, **characterised in that** the material exit openings (27, 28) are constructed in both walls of the delivery channel (26).

29. Device according to claim 27 or 28, in which the first material exit openings (27) for delivery of a first material are constructed in the first wall of the delivery channel (26) and the second material exit openings (28) for delivery of a second material are constructed in the second wall of the delivery channel (26).

30. Device according to at least one of claims 27 to 29, with an exchangeable distributor piece (20) in which the material exit openings (27, 28) run out into the delivery channel (26).

## Revendications

1. Procédé pour la fabrication de pièces plates, en particulier en forme de feuille, composées d'au moins deux matériaux différents, en particulier de plastiques, par extrusion, dans lequel les matériaux sont éjectés simultanément du dispositif d'extrusion (6) à l'état fondu de manière adjacente essentiellement dans la direction de l'étalement transversal (B) d'une pièce à extruder (50 ; 50') ainsi que transversalement à la direction d'éjection (A), avec les étapes consistant à
éjecter les matériaux du dispositif d'extrusion (6) à l'état fondu de telle sorte qu'est produite une première couche (52), les différents matériaux formant alors des portions adjacentes (52a, 52b) de la première couche, et éjecter en outre les matériaux du dispositif d'extrusion (6) à l'état fondu de telle sorte qu'est produite simultanément au moins une seconde couche séparée (54) à côté de la première couche (52), dans laquelle les différents matériaux forment également des portions adjacentes (54a, 54b), qui passent toutefois en angle par rapport aux portions (52a, 52b) de la première couche (52), et relier ensuite les couches (52, 54) à plat l'une avec l'autre.

2. Procédé selon la revendication 1,
dans lequel les différents matériaux sont éjectés de telle sorte que les portions (52a, 52b ; 54a, 54b) formées par ceux-ci sont respectivement essentiellement en forme de bande.

3. Procédé selon la revendication 1 ou 2,
dans lequel les différents matériaux sont éjectés de telle sorte que les portions (52a, 52b ; 54a, 54b) formées par ceux-ci sont parallèles les unes aux autres.

4. Procédé selon au moins l'une des revendications 1 à 3,
dans lequel les couches sont collées ou soudées l'une à l'autre.

5. Procédé selon au moins l'une des revendications 1 à 4,
dans lequel les couches sont reliées l'une à l'autre à l'intérieur du dispositif d'extrusion avant de sortir de celui-ci.

6. Procédé selon au moins l'une des revendications 1 à 5,
dans lequel les matériaux pour la formation de la première couche sont éjectés d'un premier élément de filière d'extrusion et les matériaux pour la formation de la seconde couche sont éjectés d'un second élément de filière d'extrusion et dans lequel est produit un mouvement relatif du premier élément de filière d'extrusion par rapport à l'autre élément de filière d'extrusion transversalement à la direction d'extrusion.

7. Procédé selon au moins l'une des revendications 1 à 5,
dans lequel les matériaux sont éjectés du dispositif d'extrusion (6) à l'état fondu de telle sorte qu'est d'abord produit un corps tubulaire, les différents matériaux formant alors essentiellement des portions (52a, 52b ; 54a, 54b) adjacentes essentiellement dans la direction périphérique (B) de celui-ci et passant en diagonale par rapport à la direction d'extrusion (A), et dans lequel les deux moitiés (52, 54) du corps tubulaire formant les première et seconde couches sont ensuite reliées à plat l'une avec l'autre.

8. Procédé selon la revendication 7, dans lequel les matériaux sont éjectés d'au moins un élément de filière annulaire (6) et dans lequel l'élément de filière annulaire (6) tourne autour d'un axe (4) passant essentiellement dans la direction d'extrusion (A).

9. Procédé selon la revendication 7 ou 8,
dans lequel le corps tubulaire est étendu radialement avant que ses moitiés ne soient reliées l'une à l'autre.

10. Procédé selon au moins l'une des revendications 1 à 9,
dans lequel différents matériaux sont utilisés sur le plan de la conductivité, l'élasticité et/ou la couleur.

11. Procédé selon au moins l'une des revendications 1 à 10,
dans lequel, pour la formation des différentes portions, est utilisé un premier matériau électriquement conducteur et un second matériau non-conducteur.

12. Pièce plate, en particulier en forme de feuille, fabriquée par extrusion, en particulier au moyen d'un procédé selon au moins l'une des revendications précédentes, composée d'au moyen deux matériaux différents, en particulier de plastiques, qui forment des portions adjacentes (52a, 52b) dans une première couche (52) de la pièce plate (50 ; 50'),
avec au moins une seconde couche (54) reliée à plat à la première couche (52), qui se compose également d'au moins deux matériaux différents qui forment également des portions adjacentes (54a, 54b) dans la seconde couche (54), les portions adjacentes (52a, 52b) de la première couche (52) passant en angle par rapport à celles (54a, 54b) de la seconde couche (54).

13. Pièce selon la revendication 12, dans laquelle les portions (52a, 52b ; 54a, 54b) sont formées en forme de bande.

14. Pièce selon la revendication 12 ou 13,
dans laquelle les portions (52a, 52b ; 54a, 54b) passent en angle par rapport à l'étalement longitudinal (A) de la pièce plate (50 ; 50') suivant la direction d'extrusion (A).

15. Pièce selon au moins l'une des revendications 12 à 14,
dans laquelle les couches sont reliées monobloc l'une à l'autre.

16. Pièce selon au moins l'une des revendications 12 à 15,
dans laquelle les différents matériaux se distinguent par leur conductivité, leur élasticité et/ou leur couleur.

17. Pièce selon au moins l'une des revendications 12 à 16,
dans laquelle les premières portions se composent d'un premier matériau électriquement conducteur et les secondes portions se composent d'un second matériau non-conducteur.

18. Dispositif pour la fabrication de pièces (50) plates, en particulier en forme de feuille, composées d'au moins deux matériaux différents, en particulier de plastiques, par extrusion, en particulier pour la réalisation d'un procédé suivant au moins l'une des revendications 1 à 11, dans lequel
plusieurs ouvertures de sortie de matériau (27, 28) pour la distribution de différents matériaux à l'état fondu sont disposées en rang les unes à côté des autres transversalement à la direction d'éjection (A) d'une pièce tubulaire à extruder dans un élément de filière annulaire (6) et un matériau déterminé est distribué respectivement d'une ouverture de sortie de matériau déterminée ;
l'élément de filière annulaire (6) peut être déplacé essentiellement dans la direction (B) de la disposition des ouvertures de sortie de matériau (27, 28) ainsi que transversalement à la direction d'éjection (A) de la pièce tubulaire à extruder.
et un dispositif de doublage est placé après, dans lequel la pièce tubulaire extrudée est pliée à plat de telle sorte que ses deux moitiés soient placées l'une sur l'autre et reliées l'une à l'autre.

19. Dispositif selon la revendication 18, dans lequel l'élément de filière annulaire (6) présente un orifice de distribution (12, 26) essentiellement annulaire en coupe transversale pour l'éjection de la pièce plate extrudée (50 ; 50').

20. Dispositif selon la revendication 19, dans lequel l'élément de filière annulaire (6) peut tourner autour de l'axe central (4) de l'orifice de distribution (12, 26) essentiellement annulaire.

21. Dispositif pour la fabrication de pièces (50') plates, en particulier en forme de feuille, composées d'au moins deux matériaux différents, en particulier de plastiques, par extrusion, en particulier pour la réalisation d'un procédé selon au moins l'une des revendications 1 à 11,
avec au moins un premier et un second groupe d'ouvertures de sortie de matériau (27, 28, 27', 28') pour la distribution de différents matériaux à l'état fondu,
un matériau déterminé étant distribué respectivement d'une ouverture de sortie de matériau déterminée,
les ouvertures de sortie de matériau (27, 28) du premier groupe étant disposées en rang les unes à côté des autres transversalement à la direction d'éjection (A) d'une pièce à extruder dans un premier élément de filière (6) et les ouvertures de sortie de matériau (27', 28') du second groupe étant disposées en rang les unes à côté des autres transversalement à la direction d'éjection (A) de la pièce à extruder dans un second élément de filière (6), et
les éléments de filière (6, 6') pouvant être déplacés l'un par rapport à l'autre essentiellement en direction (B) de la disposition des ouvertures de sortie de matériau (27, 28, 27', 28') ainsi que transversalement à la direction d'éjection (A) de la pièce à extruder, et
le premier groupe d'ouvertures de sortie de matériau (27, 28) étant prévu pour la fabrication d'une première couche (52) de la pièce et le second groupe d'ouvertures de sortie de matériau (27', 28') étant prévu pour la fabrication d'une seconde couche (54) de la pièce,
avec un dispositif pour relier à plat les couches (52, 54).

22. Dispositif selon la revendication 21, dans lequel les éléments de filière (6, 6') sont formés comme éléments de filière annulaire avec un orifice de distribution (12, 26, 12', 26') essentiellement annulaire en coupe transversale pour l'éjection de la pièce plate extrudée (50').

23. Dispositif selon la revendication 22, dans lequel les éléments de filière annulaires (6, 6') peuvent tourner autour de l'axe central (4) de l'orifice de distribution (12, 26, 12', 26') essentiellement annulaire.

24. Dispositif selon la revendication 22 ou 23, dans lequel les orifices de distribution (12, 26, 12', 26') essentiellement annulaires des éléments de filière annulaires (6, 6') sont disposés essentiellement de manière concentrique et coaxiale les uns par rapport aux autres.

25. Dispositif selon au moins l'une des revendications 21 à 24, dans lequel chaque groupe d'ouvertures de sortie de matériau est relié à un câble de distribution commun (46) par l'intermédiaire d'un canal de communication séparé (44, 44').

26. Dispositif selon au moins l'une des revendications 21 à 25, dans lequel chaque groupe d'ouvertures de sortie de matériau se compose d'un nombre déterminé d'ouvertures de sortie de matériau pour chacun des différents matériaux à distribuer.

27. Dispositif selon au moins l'une des revendications 18 à 26, avec au moins un canal de distribution (26) qui est formé par des première et seconde parois espacées l'une de l'autre, les ouvertures de sortie de matériau (27, 28) étant formées dans au moins une des parois du canal de distribution (26).

28. Dispositif selon la revendication 27,
**caractérisé en ce que** les ouvertures de sortie de matériau (27, 28) sont formées dans les deux parois du canal de distribution (26).

29. Dispositif selon la revendication 27 ou 28, dans lequel les premières ouvertures de sortie de matériau (27) pour la distribution d'un premier matériau sont formées dans la première paroi du canal de distribution (26) et les secondes ouvertures de sortie de matériau (28) pour la distribution d'un second matériau sont formées dans la seconde paroi du canal de distribution (26).

30. Dispositif selon au moins l'une des revendications 27 à 29, avec une pièce de répartition (20) échangeable, dans laquelle les ouvertures de sortie de matériau (27, 28) débouchent dans le canal de distribution (26).
